# EUROPEAN PATENT APPLICATION

(11) **EP 1 285 974 A1**
(43) Date of publication of application: **26.02.2003**
(21) Application number: 02255790.4
(22) Date of filing: 20.08.2002
(51) Int. Cl.: C23C 4/08, C23C 4/00, C23C 4/04, C03B 40/00, C03B 9/48

(54) **Coating compositions**

(30) Priority: 21.08.2001 GB 0120263
(71) Applicant: Alphatek Hyperformance Coatings Ltd, Ramsbottom, BL0 0NE (GB)
(72) Inventor: Greenwood, Steven T. c/o Alphatek Hyper., Ramsbottom BL0 0NE (GB); Greenwood, Shaun A. c/o Alphatek Hyperf., Ramsbottom BL0 0NE (GB); Clarke, Andrew P. c/o Alphatek Hyperf., Ramsbottom BL0 0NE (GB)
(74) Representative: Wilson Gunn M'Caw

(57) **Abstract**

A coating composition comprising a pseudo alloy formed by the codeposition of at least two distinct alloys and/or pure metals to form a heterogenous coating on a glass mould, the coating being applied using thermal spray coating techniques such as a high velocity oxy-fuel system.

## Description

This invention relates to coating compositions which may be applied to forming moulds, particularly glass forming moulds.

Glass containers are produced by way of forming moulds. A gob of molten glass is introduced into a forming mould at temperatures in the region of 900°C after which it is formed into the desired shape by either mechanical (pressing) or pneumatic (blowing) means. Once cool the glass container is removed from the forming mould.

Current glass forming techniques are far from ideal. As the shaped molten glass cools solid particles form resulting in abrasive wear of the moulds contact surfaces, over time this increases the container volume rendering it unusable as it becomes out of specification. Since the glass forming process is repeated many times per minute the mould surfaces are subjected to a high rate of high temperature abrasive wear. Typically, a glass forming mould is subjected to 1,000,000 operations or approximately 4 months continuous production before being discarded.

Due to the high speed operation of the glass forming process, the release of the glass container from the forming mould requires the assistance of a lubricant on the contact surfaces. The lubricant is typically applied by a manual swabbing operation every 15 to 30 minutes, since this requires a machine operator to come into close proximity with moving surfaces in excess of 500°C and potentially carcinogenic lubricant fumes the health and safety implications of this operation are obvious.

Furthermore, the need to lubricate the mould gives rise to a 2 to 4% reduction in overall process efficiency since application of the lubricant causes both the forming mould operating temperature to be reduced for the next few cycles resulting in insufficiently formed containers and therefore wastage and machine down time when no production is underway.

Accordingly, it is desirable to improve the wear resistance and the lubricity of the forming moulds contact surfaces.

The application of coating compositions to metal substrates is widely known in order to increase wear characteristics. However, full glass mould cavity coatings have not previously been successfully applied largely due to short falls in both the application equipment and the technique adopted. Traditional coating systems used in conjunction with glass moulds are applied via hand held powder welding techniques which are unsuitable for coating large areas such as full cavities. These processes are common place in the localised application of coating systems.

The more recently developed and more suitable coating techniques have been confined to "high quality" industries such as the aerospace industry. Furthermore, significant development of these techniques is required before they can be successfully applied to the coating of full cavity glass moulds.

Typically, coating compositions are applied by standard thermal spray techniques which are well known in the art.

When applied to glass moulds standard thermal spray techniques typically comprise an atmospheric or vacuum fusing step following application of a coating system in order to sufficiently adhere the coating to the metal surface. This step is both time consuming and expensive.

Furthermore, existing moulds cannot be coated using standard thermal spray techniques as the high temperatures required for either atmospheric or vacuum fusing procedure can cause the glass forming moulds to distort rendering them unusable. Accordingly, these techniques are unsuitable for mould repair purposes.

Standard thermal spray techniques generally introduce a heating effect to the substrate surface, therefore the substrate temperature is typically maintained below 150°C during application in order to prevent phase changes in the coating material and/or substrate. Accordingly, it is not uncommon to use a cooling procedure during coating.

The most suitable thermal spray technique is a High Velocity Oxy-Fuel (HVOF) process, which was originally developed in the early 1980's, whereby controlled amounts of oxygen and fuel, for example propane, hydrogen or kerosene, are ignited in a combustion chamber to produce a rapidly moving (Mach. 5-6) exhaust jet. The required coating material is introduced into the efflux in the form of a powder of controlled size and composition by the use of an inert carrier gas such as argon or nitrogen. This material is plasticised as it is accelerated to in excess of Mach. 1 at the surface to be coated. The coatings are built up in layers, typically 0.025mm thick, to achieve the desired overall thickness.

Existing coating materials applied by HVOF, typically comprise particles each consisting of all the elements of the composition in the correct proportions. These particles generally have a grain size distribution from -53+10 microns, with the precise distribution being dependent on the exact process type, material and application.

Current glass mould coating compositions, when applied by standard thermal spray techniques result in a porous interconnected coating which, at in use temperatures of approximately 500°C, results in the formation of oxides that dramatically reduce the performance of the coating composition by decreasing the thermal conductivity and increasing the internal stresses.

These techniques require significant modification in order that a coating which is suitable for the contact surfaces of glass forming moulds is achieved.

According to the first aspect of the present invention there is provided a pseudo alloy coating composition.

The pseudo alloy coating composition of the present invention is formed by the co-deposition of at least two distinct alloys and or pure metals to form a heterogenous coating.

Advantageously, the pseudo alloy coating composition of the present invention exhibits properties gained from percursor materials as well as retaining clearly defined elements within it's micro-structure.

Accordingly, the pseudo alloy coating composition of the present invention displays particles of at least one elemental metal, for example copper, in a alloy matrix, for example nickel.

Advantageously, the presence of an elemental metal, having a high heat transfer characteristic, in the pseudo alloy coating composition of the present invention allows the glass to cool rapidly without the alloy matrix dramatically reducing the thermal conductivity thereby giving rise to a highly desirable rate of glass cooling.

The pseudo alloy coating composition of the present invention may be a powder.

The pseudo alloy coating composition of the present invention may comprise at least one metal element and at least one semi-metal.

Preferably, the metal element(s) of the pseudo alloy coating composition of the present invention will be nickel, copper and chromium and mixtures thereof.

The metal element(s) constitute from 10 to 100 wt% of the total pseudo alloy coating composition of the present invention.

Advantageously, since copper and its alloys do not have good wear characteristics in comparison to high nickel alloys, their use in the matrix of the pseudo alloy coating composition of the present invention gives rise to greatly improved wear characteristics.

Still further advantageously, it is possible to incorporate a high copper content into the pseudo alloy coating composition of the present invention without degrading the matrix performance.

Preferably, the semi-metal(s) of the pseudo alloy coating composition of the present invention will be boron and silicon and mixtures thereof.

The semi-metal(s) constitute from 1 to 10 wt% of the total pseudo alloy coating composition of the present invention.

The pseudo alloy coating composition of the present invention may optionally comprise carbon and/or an allotrope of carbon, as discrete particles or as a component of the homogeneous coating.

Preferably, the allotrope of carbon of the pseudo alloy coating composition of the present invention will be graphite.

Graphite constitutes from 0 to 15 wt% of the total pseudo alloy coating composition of the present invention.

All other elements which may be present in the pseudo alloy coating composition are found in trace amounts, typically less than 1 wt%.

The components of the composition are solid at room temperature.

Furthermore, the pseudo alloy coating composition of the present invention may be composed of distinctly different powder phases, for example nickel alloy powder, copper powder and nickel graphite powder, each of which can have a different grain size distribution.

The nickel alloy powder phase of the pseudo alloy coating composition of the present invention will have a grain size distribution of -55+15 microns.

The copper powder phase of the pseudo alloy coating composition of the present invention will have a grain size distribution of -90+15 microns.

The nickel graphite powder phase of the pseudo alloy coating composition of the present invention will have a grain size distribution of -90+20 microns.

Typically, the pseudo alloy coating composition of the present invention is applied in layers of approx. 0.025mm thick up to the desired overall coating thickness which is largely dependent upon the reason for its application.

Preferably, the overall coating thickness of the pseudo alloy coating composition of the present invention is from 0.02 to 5.0mm.

Advantageously, when the pseudo alloy coating composition of the present invention is applied to a glass forming mould via the process described hereinafter a greater abrasive wear resistance against the action of the solidifying glass is achieved when compared to the uncoated cast iron moulds. This is typified by the comparative hardness of 28 to 33 Rockwell C and 140 to 160 Brinell respectively.

A still further advantage of the pseudo alloy coating composition of he present invention is the capability to adjust the hardness of the final coating composition between the range 20 to 40 Rockwell C in accordance with the application requirements.

Conveniently, the increased hardness associated with glass forming moulds treated with the pseudo alloy coating composition of the present invention does not result in the need for different finishing techniques than would be used on the standard cast iron moulds. That is to say the same polishing and engraving techniques are applicable, for example.

A further advantage of the pseudo alloy coating composition of the present invention lies with its capability to transfer heat away from the contact surfaces of the glass forming mould. This enables the glass form to solidify sufficiently within the required process cycle and to be removed without deformation, thereby significantly reducing wastage.

The thermal conductivity of the pseudo alloy coating composition of the present invention will typically range from about 64 w/m°C to 126 w/m°C.

This enables the glass forming mould, whose conductivity is 42 w/m°C, to 63w/m°C, to reach a uniform temperature more quickly thereby decreasing the possibility of hot/cold spots which adversely effect glass flow.

A still further advantage of the coating composition of the present invention can be found in its ability to facilitate the release characteristics of the glass forming mould.

Following initial lubrication of a glass forming mould treated with the coating composition of the present invention tests have shown that further swabbing of the coated glass forming mould has not been required for 18 hours compared with 15 to 30 minutes for an uncoated glass forming mould. The commercial benefits together with the safety of the operative derived from this feature are obvious.

According to a second aspect of the present invention there is provided a method of coating a glass forming mould using a composition according to the first aspect of the invention.

Suitable methods for the application of the aforesaid composition include all known thermal spray coating methods.

Most preferably application occurs via a high velocity oxy-fuel (HVOF) system.

The HVOF system of the method of the present invention may produce a lean burn combustion.

The method of the present invention requires that the glass forming moulds are preheated prior to the application of the pseudo alloy coating composition described herein.

Preferably, the glass forming moulds are preheated to 250-300°C prior to the application of the pseudo alloy coating composition described herein.

During the application process the bulk temperature of the glass forming moulds increases to 330-340°C.

Advantageously, application via HVOF results in a forming glass mould coating having low porosity, typically <1%, which enables the contact surfaces to be polished to the required finish, which is typically higher than can be achieved on uncoated cast iron moulds.

Furthermore, since the porosity of the coating composition applied by HVOF is discrete and does not tend to be interconnected detrimental oxides do not form thus significantly reducing the decline in coating performance.

A further advantage of the application via HVOF can be found in the high bond strength of the resulting coating, typically 41-97+MPa. The coating remains bonded to the cast iron mould substrate during the cyclic glass forming operation without the use of subsequent heat treatments, thereby eliminating the need for treatments such as vacuum fusing, a feature which is believed to exist as a result of both the method and the pseudo alloy coating composition described herein.

A still further advantage of application via HVOF lies with the low intrinsic oxide content imparted by the HVOF process into the coating, typically <1-2%, thus ensuring that the coating has the necessary thermal conductivity characteristics to enable the glass form to solidify sufficiently prior to removal from the glass forming mould thereby significantly reducing deformation and therefore wastage.

Furthermore, the use of HVOF allows the HVOF equipment parameters to be controlled thus achieving neutral/compressive stress regimes in the coating, thereby permitting the necessary cohesive deposit thickness to be applied without any subsequent fusing treatments.

According to a third aspect of the present invention there is provided a glass forming mould coated with the pseudo alloy coating composition described herein.

Most preferably the pseudo alloy coating composition of the present invention will be applied to the aforesaid glass forming mould by way of the method described herein.

Furthermore, there is no limit to the shape of the glass forming mould which can be produced.

It is expected that the glass forming moulds coated with the pseudo alloy coating composition described herein will have a life expectancy 2 to 3 times greater than that of the non-coated glass forming moulds thereby increasing the efficiency of the glass forming process since machine down time will be reduced.

The invention described herein is suitable for use on the full cavity, that is all glass contact surfaces, of a glass forming mould. Since both the first and second aspects of the present invention are suitable for repairing localised damage of glass forming moulds it finds utility in both new and used glass forming moulds.

The method described herein is ideally suited to repairing local damage of a glass forming mould since it allows precise application of the pseudo alloy coating composition to a defined area.

Furthermore, since the method described herein does not require a vacuum fusing finishing procedure the repairs occur efficiently without distortion of the glass forming mould.

The invention described herein may also find utility in other parts of the glass moulding technology, these include plungers, neck rings, bottom rings, baffles and gob delivery chutes.

The invention is now further described by way of the following examples;

A typical coating composition according to the first aspect of the invention:-

| **Material Element** | **Max Weight %** | **Min Weight %** |
|---|---|---|
| Nickel | Balance to 100 | |
| Copper | 35 | 15 |
| Chromium | 15 | 4.5 |
| Silicon | 4 | 1.5 |
| Carbon | 15 | 0 |
| Boron | 2 | 0.7 |
| NB: Includes carbon in all forms. | | |

It is of course to be understood that the invention is not limited to the above embodiments which are described by way of example only.

## Claims

1. A pseudo alloy coating composition.

2. A coating composition according to claim 1, wherein the composition is formed by the co-deposition of at least two distinct alloys and/or pure metals to form a heterogeneous coating.

3. A coating composition according to claim 1 or claim 2, wherein particles of at least one elemental metal are present.

4. A coating composition according to any preceding claim, wherein the composition is in the form of a powder.

5. A coating composition according to any preceding claim, wherein the composition comprises at least one metal element and at least one semi-metal.

6. A coating composition according to claim 5, wherein the metal element(s) is selected from nickel, copper, chromium and mixtures thereof.

7. A coating composition according to any preceding claim, wherein the metal element constitutes from 10 to 100 wt% of total composition.

8. A coating composition according to claim 5, wherein the semi-metal is selected from boron, silicon and mixtures thereof.

9. A coating composition according to claim 8, wherein the semi-metal(s) constitute from 1 to 10 wt% of the total composition.

10. A coating composition according to any preceding claim, wherein the composition optionally comprises carbon and/or allotrope of carbon.

11. A coating composition according to claim 10, wherein allotrope of carbon is graphite.

12. A coating composition according to claim 11, wherein graphite constitutes from 0 to 15 wt% of the total composition.

13. A coating composition according to any preceding claim, wherein the composition is composed of different powder phases.

14. A coating composition according to claim 13, wherein the different powder phases are selected from nickel alloy, powder, copper powder and nickel graphite powder.

15. A coating composition according to claim 14, wherein the nickel powder phase has a grain size distribution of -55+15 microns.

16. A coating composition according to claim 14, wherein the copper powder phase has a grain size distribution of -90+15 microns.

17. A coating composition according to claim 14, wherein the nickel graphite powder phase has a grain size distribution of -90+20 microns.

18. A coating composition according to any preceding claim, wherein the composition is applied to a substrate in at least one layer

19. A coating composition according to claim 18, wherein each layer is 0.025mm thick.

20. A coating composition according to claim 18, wherein the thickness of the coating composition is from 0.02 to 5.0mm.

21. A coating composition according to any preceding claim, wherein the thermal conductivity of the composition ranges from 64w/m°C to 126w/m°C.

22. A method of coating a glass forming mould using a pseudo alloy coating composition as described herein.

23. A method according to claim 22 wherein the composition is applied using thermal spray coating techniques.

24. A method according to claim 22 or claim 23, wherein the composition is applied via a high velocity oxy-fuel system.

25. A method according to any of claims 22 to 24, wherein the substrate is preheated to 250-300°C prior to the application of the composition.

26. A glass forming mould coated with the pseudo alloy coating composed described herein.

27. A coating composition as herein before described with reference to example 1.
